# EUROPEAN PATENT SPECIFICATION

(11) **EP 1 666 685 B1**
(45) Date of publication and mention of the grant of the patent: **06.08.2008**
(21) Application number: 05025901.9
(22) Date of filing: 28.11.2005
(51) Int. Cl.: E05B 53/00, E05B 65/20, E05B 47/00, B62D 25/20

(54) **Vehicle body and a door latch apparatus**
Fahrzeugskarosserie und Türschlosseinrichtung
Carosserie et dispositif de verrouillage pour porte

(30) Priority: 01.12.2004 JP 2004348487
(43) Date of publication of application: 07.06.2006
(73) Proprietor: Mitsui Mining and Smelting Co., Ltd, Shinagawa-ku, Tokyo 141-8584 (JP)
(72) Inventor: Gotou, Shingo, c/o Nirasaki Factory Mitsui Mining, Shimojo, Nirasaki-shi Yamanashi 407-8555 (JP); Okawa, Shintaro,c/o Nirasaki Factory Mitsui Mining, Shimojo, Nirasaki-shi Yamanashi 407-8555 (JP)
(74) Representative: Grünecker, Kinkeldey, Stockmair & Schwanhäusser Anwaltssozietät

(56) References cited:
- EP-A- 0 959 205
- DE-A1- 19 649 377
- DE-A1- 19 924 458
- PATENT ABSTRACTS OF JAPAN vol. 014, no. 039 (M-924), 24 January 1990 (1990-01-24) -& JP 01 271590 A (AISAN IND CO LTD), 30 October 1989 (1989-10-30)
- PATENT ABSTRACTS OF JAPAN vol. 008, no. 033 (P-254), 14 February 1984 (1984-02-14) & JP 58 186821 A (OOI SEISAKUSHO:KK; others: 01), 31 October 1983 (1983-10-31)

## Description

The present invention relates to a vehicle body and a door latch apparatus according to the preamble of claim 1. Such a vehicle body and door latch apparatus is already known from DE 196 49 377 (A1). Said document describes a door latch apparatus comprising a first electric latch releasing means which releases the hold of a door in the fully closed state using the drive force of an actuator. A second latch releasing means releases the hold of the door in the fully closed state by virtue of an operation force executed on an operation unit. The operation unit of the second latch releasing means is disposed at a position on a central portion of a floor panel of the vehicle body where a floor tunnel extends in a longitudinal direction of the vehicle.

A door latch apparatus is also described in JP-UM-A-63-146066

The door latch so described includes a door latch means at a position on a door which oppositely faces a striker on a body of a vehicle, whereby the door is held in a fully closed state by the door latch means . The hold of the door in the fully closed state by the door latch means is able to be released by an electric latch releasing means and a mechanical latch releasing means. In the former electric latch releasing means, the hold of the door in the fully closed state is able to be released by virtue of a drive force of an electric actuator, and in the latter mechanical latch releasing means, the hold of the door in the fully closed state is able to be released by virtue of an operation force exerted on an operation unit. The operation unit in the mechanical latch releasing means is disposed on a passenger compartment side surface of the door, and the operation force exerted on the operation unit is transmitted to the door latch means via a wire which passes through the interior of the door. The wire is guided by means of guide rollers provided in the interior of the door.

In the door latch apparatus like this, when the electric latch releasing means fails due to insufficient power (deterioration of a battery mounted) or the like, the hold of the door in the fully closed state by the door latch means is able to be released by operating the operation unit of the mechanical latch releasing means.

In the related door latch apparatus like this, however, since the door latch means and the operation unit of the mechanical latch releasing means are connected to each other by the wire that is guided by means of the guide rollers provided in the interior of the door, in the event that a large external force is exerted on the vehicle when the vehicle is involved in a collision, there is caused a risk that the wire comes off the guide rollers. As this occurs, there is caused, in turn, a risk that the mechanical releasing means cannot be activated to function as intended.

An object of the invention is to provide a vehicle body and a door latch apparatus which can ensure to a greater extent that the hold of the door in the fully closed state is released even in the event that a large external force is exerted on the vehicle when it is involved in a collision.

With a view to attaining the object, according to the invention there is provided a vehicle body and a door latch apparatus comprising a door latch means which holds a door provided on a vehicle body in a fully closed state, a first latch releasing means which releases the hold of the door in the fully closed state by virtue of a drive force of an actuator, and a second latch releasing means which releases the hold of the door in the fully closed state by virtue of an operation force exerted on an operation unit, wherein the operation unit of the second latch releasing means is disposed at a position on a central portion of a floor panel of the vehicle body where a floor tunnel extends in a longitudinal direction of the vehicle and wherein the operation unit of the second latch releasing means is connected to the door latch means via a transmission mechanism for the operation force and the transmission mechanism is laid out in such a manner as to extend along the floor tunnel and a crossmember which extends in a direction which intersects with the floor tunnel.

According to an embodiment of the invention, the door latch means is provided on the vehicle body side.

According to an embodiment of the invention, the door latch means includes a latch which can mesh with a striker on the door side and a pawl which can retain the latch at a position where the latch is allowed to mesh with the striker, wherein the actuator of the first latch releasing means includes an electric actuator which can move the pawl to a position where the retention of the latch is released, and wherein the operation unit of the second latch releasing means can operate the pawl via the transmission mechanism so that the pawl is moved to the position where the retention of the latch is released. With a vehicle body and door latch apparatus according to the invention, in the door latch apparatus which includes the first latch releasing means which can release the hold of the door in the fully closed state by virtue of the drive force of the actuator and the second latch releasing means which can release the hold of the door in the fully closed state by virtue of the operation force exerted on the operation unit, since the operation unit of the second latch releasing means is disposed at the position on the floor panel where the floor tunnel is provided and the operation unit and the door latch means are connected to each other by the transmission mechanism of the operation force, the function of the second latch releasing means can be maintained even when a large external force is exerted on the vehicle when it is involved in a collision. Namely, a change in the relative positional relationship between the operation unit of the second latch releasing means and the door latch means can be suppressed to a low level when such a large external force is exerted on the vehicle due to such a collision, and as a result, the damage to the transmission means which establishes a connection between the operation unit and the door latch means can be prevented, whereby not only can the function of the second latch releasing means be maintained but also the malfunction of the door latch means can be prevented.

In addition, by laying out the transmission mechanism in such a manner as to extend along the floor tunnel and the floor crossmember, the damage to the transmission means can be prevented in an ensured fashion by the floor crossmember which is less deformed in particular when the vehicle is involved in a side collision.

In addition, by providing the door latch means on the vehicle body side as in the case with the operation unit of the second latch releasing means, the configuration of the transmission means which provides the connection therebetween can be simplified. For example, the transmission mechanism can be configured simple by utilizing a cable that is easy to lay out.

Additionally, by forming the door latch means into a general configuration which includes a latch and a pawl and in which the pawl is moved by the first and second latch releasing means, it is possible to ensure that the hold of the door in the fully closed state can be released, while realizing a more simplified configuration.
Fig. 1 is a schematic side view of a vehicle on which a door latch apparatus according to a first embodiment of the invention is provided;
Fig. 2 is a schematic plan view of the vehicle shown in Fig. 1;
Fig. 3 is a perspective view of a main portion which explains a mode of laying out a cable in the vehicle shown in Fig. 1;
Fig. 4 is a plan view which describes an example of the configuration of an emergency handle in Fig. 3;
Fig. 5 is an external perspective view of a door latch mechanism showing a full-latch state;
Fig. 6 is a schematic plan view of a vehicle on which a door latch apparatus according to a second embodiment of the invention is provided;
Fig. 7 is a schematic plan view of a vehicle on which a door latch apparatus according to an example not forming part of the invention is provided.

Embodiments of the invention will be described below based on the drawings.

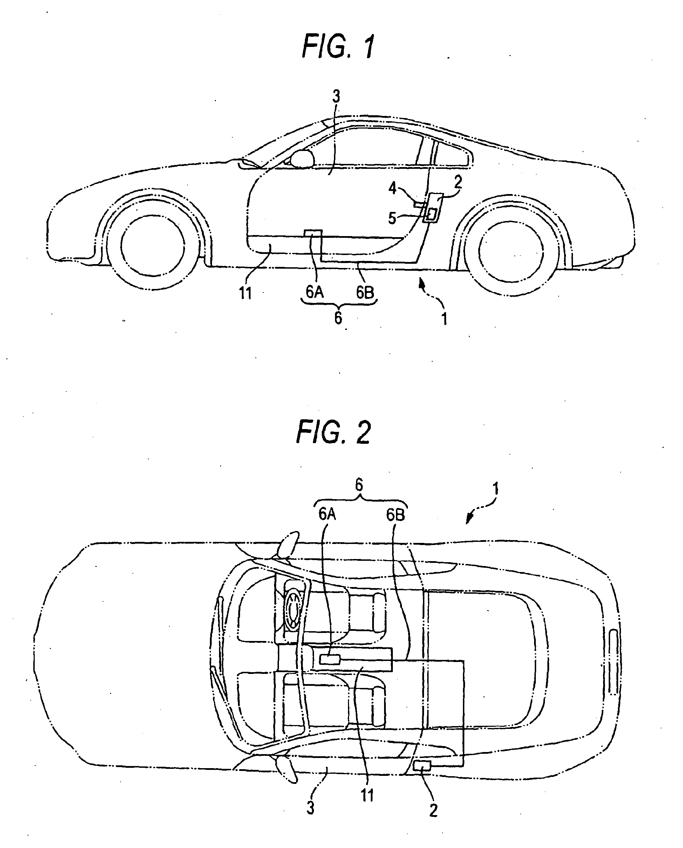

Figs. 1 to 5 are drawings which describe a first embodiment of the invention.

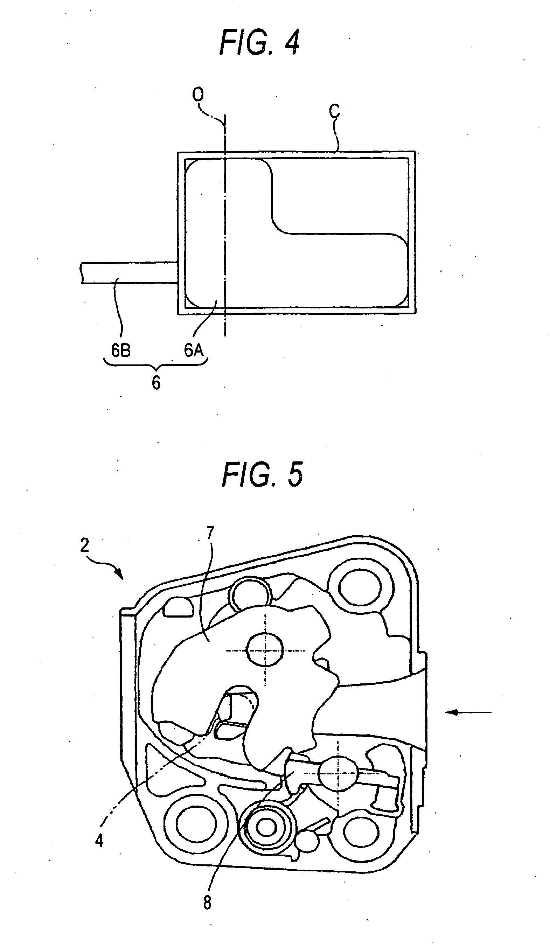

Fig. 1 is a schematic side view of a vehicle provided with a door latch apparatus of the invention, Fig. 2 is a schematic plan view of the vehicle, and Fig. 5 is an external perspective view of a door latch mechanism in a full-latch state. In these figures, a door latch mechanism (a door latch means) 2 is provided on a vehicle body 1, and a striker 4 is provided on a door 3. The door latch mechanism 2 is made into a general configuration which can hold the door 3 in a fully closed state. For example, this door latch mechanism 2 includes a latch 7 adapted to mesh with the striker 4 and a pawl 8 which can retain the latch 7 at a position where the latch 7 is allowed to mesh with the striker 4, whereby the door 3 is held in the fully closed state when the pawl 8 retains the latch member at the position where the latch member is allowed to mesh with the striker 4. Incidentally, an arrow shown in Fig. 5 indicates a direction which the striker 7 entries into the door latch mechanism 2.

A first latch releasing mechanism (a first latch releasing means) 5 is incorporated in the door latch mechanism 2, and this latch releasing mechanism 5 can release the hold of the door 3 in the fully closed state by virtue of a drive force of an actuator (for example, an electric actuator). This latch releasing mechanism 5 is made into a general configuration in which the hold of the door 3 in the fully closed state by the door latch mechanism 2 is released by allowing the actuator to be controlled to be driven using an operation switch, not shown, which is disposed on a passenger compartment side of the door 3 or the like. For example, this latch releasing mechanism 5 is configured such that the pawl 8 provided on the door latch mechanism 2 is able to be moved by virtue of the drive force of the actuator, so that, when the latch 7 is retained at the position where the latch 7 is allowed to mesh with the striker 4 by the pawl 8 or when the door 3 is held in the fully closed state, the pawl 8 is moved so as to release the retention of the latch 7, whereby the hold of the door 3 in the fully closed state can be released. Actuators of various driving modes including electric, hydraulic and pneumatic ones can be adopted as the actuator in the latch releasing mechanism 5. An actuator of whichever type of driving mode is used, power is supplied thereto for use directly or indirectly from a battery, not shown, which is installed on the vehicle.

Since both the door latch mechanism 2 and the first latch releasing mechanism 5 are provided on the vehicle body 1 side or the stationary side, cables that are to be provided in the latch releasing mechanism 5 for power supply to and control of the actuator can easily be laid out compared with a case where the latch releasing mechanism 5 is provided on the door 3 side or the movable side, the degree of freedom in layout of an operation switch being thereby enhanced.

In addition, a second latch releasing mechanism (a second latch releasing means) 6 is connected to the door latch mechanism 2.

This latch releasing mechanism 6 includes an emergency handle (an operation unit) 6A which is adapted to be operated within a passenger compartment of the vehicle and a cable (a transmission means) 6B which connects the handle 6A and the door latch mechanism 2. The handle 6A is disposed at a position on a floor panel 10 where a floor tunnel 11 is provided. The latch releasing mechanism 6 is configured such that the hold of the door 3 in the fully closed state by the door latch mechanism 2 is released when the cable 6B is pulled in a longitudinal direction by virtue of an operation force exerted on the handle 6A. For example, the cable 6B is connected to the pawl 8 provided on the door latch mechanism 2, and when the latch 7 is retained by the pawl 8 at the position where the latch 7 is allowed to mesh with the striker 4, that is, when the door 3 is held in the fully closed state, the pawl 8 is moved to release the retention of the latch 7 by virtue of the pulling force exerted on the cable 6B.

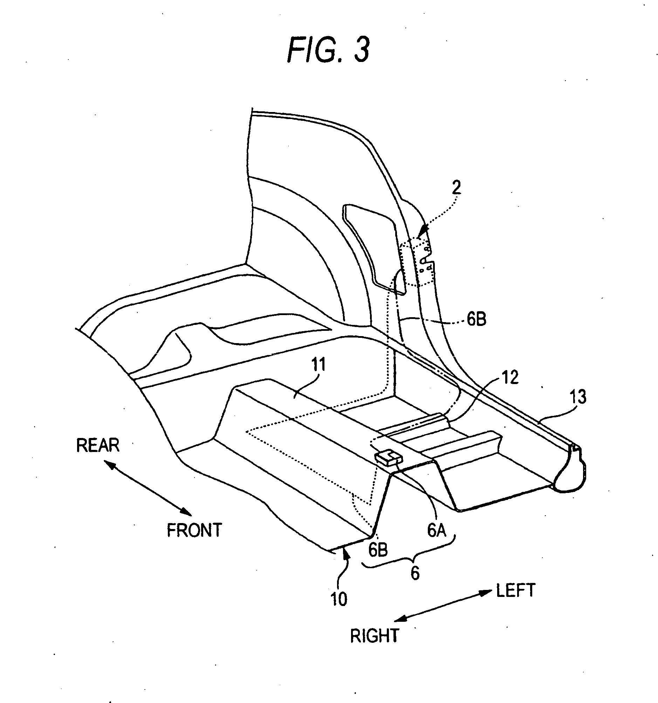

The floor tunnel 11 is, as shown in Fig. 3, formed on the floor panel 10 which makes up the vehicle body 1 in such a manner as to extend in the longitudinal direction of the vehicle. The handle 6A of this embodiment is disposed at a position on an upper portion of the floor tunnel 11 and is, as shown in Fig. 4, configured so as to be operated to rotate upwards about a horizontal axis O to thereby pull the cable 6B. Reference character C in Fig. 4 denotes a case for the handle 6A. The cable 6B is laid out to extend along the floor tunnel 11 as indicated by a dotted line in Fig. 3. In the case of this embodiment, the cable 6B is laid out in such a manner as to pass through the interior of the floor tunnel 11.

Next, the function of the embodiment will be described below.

Normally, the hold of the door 3 in the fully closed state by the door latch mechanism 2 can be released by activating the actuator of the latch releasing mechanism 5 by the operation switch. On the other hand, in the event that the latch releasing mechanism 5 fails due to insufficient power (deterioration of the battery mounted) , the hold of the door 3 in the fully closed state by the door latch mechanism 2 can be released by operating the handle 6A of the latch releasing mechanism 6.

Namely, in the event that the handle 6A is configured as shown in Fig. 3, the hold of the door. 3 in the fully closed state can be released by operating the handle 6A to rotate it in the upward direction in the figure within the passenger compartment. In addition, the floor tunnel 11 on which the handle 6A is positioned deforms only to a small extent in particular when the vehicle is involved in a longitudinal collision. Due to this, when the vehicle is involved in the longitudinal collision or the like, the damage to the handle 6A can be prevented. In addition, the change in the relative positional relationship between the handle 6A and the door latch mechanism 2 is suppressed as small as possible, thereby making it possible to prevent the damage to the cable 6B which connects the relevant members to each other. As a result, not only can the function of the latch releasing mechanism be maintained but also the malfunction of the door latch mechanism 2 can be prevented.

Note that the handle 6A may be disposed not only on the upper surface of the floor tunnel 11 but also on a side surface or inner surface thereof. Alternatively, the handle 6A may be disposed directly on the floor tunnel 11 or may be disposed indirectly thereon via a console bin (not shown) that is disposed on the floor tunnel 11. In short, the handle 6A can only have to be disposed at a position on the floor tunnel 11 in such a manner as to be supported on the floor tunnel 11 directly or indirectly. In addition, the anti-theft characteristic can also be secured by setting the installation position of the handle 6A within the console bin or the like in order for the existence of the handle 6A to be recognized from the outside of the vehicle. In addition, the cable 6B does not always have to pass through the interior of the floor tunnel 11 but only has to be laid out along the floor tunnel 11. Namely, the cable 6B may be able to be laid out in such a manner as to be superposed directly or indirectly on the external or internal surface of the floor tunnel 11.

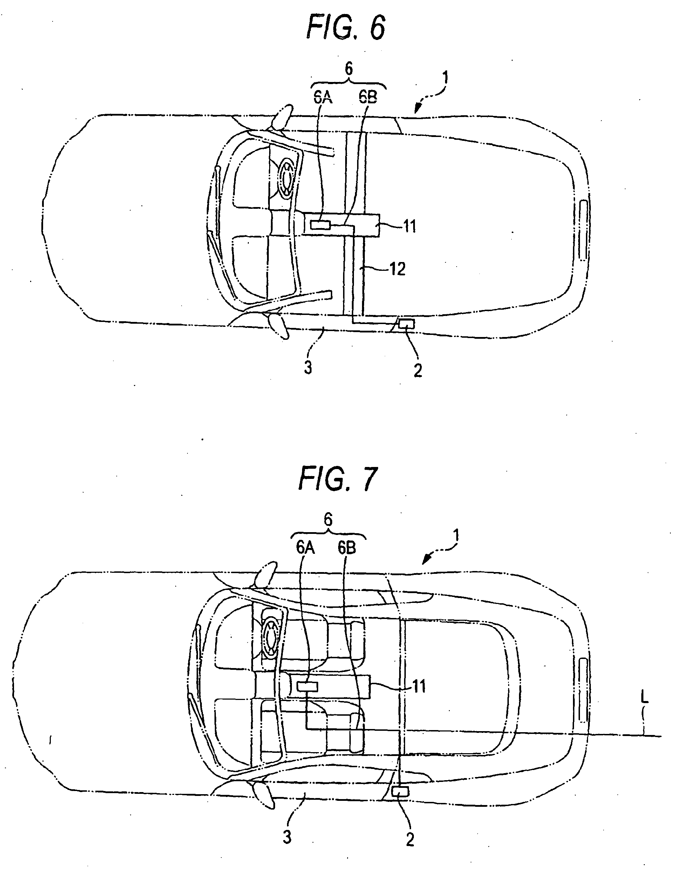

Fig. 6 is a diagram which describes a second embodiment of the invention. A cable 6B in this embodiment is laid out in such a manner as to extend along the floor tunnel 11 and a floor crossmember 12. To be more specific, as indicated by a chain double-dashed line in Fig. 3, the cable 6B is laid out in such a manner as to extend along the floor tunnel 11 and the floor crossmember 12.

The floor crossmember 12 deforms only to a small extent even in the event that a side sill portion 13 (refer to Fig. 3) on a side of the floor panel 10 is deformed when the vehicle is involved in a side collision. Due to this, the change in the relative positional relationship between the handle 6A and the door latch mechanism 2 is suppressed to a smaller level, there by making it possible to ensure that the damage to the cable 6B which connects between the relative members is prevented. As a result, not only can the function of the latch releasing mechanism be maintained in a more ensured fashion but also the malfunction of the door latch mechanism 2 can be prevented in a more ensured fashion. Note that the cable 6B may be laid out along the floor crossmember 12. Namely, the cable 6B may only have to be laid out in such a manner as to be superposed directly or indirectly on an external or internal surface of the floor crossmember 12.

Fig. 7 is a diagram which describes an example not forming part of the invention. In Fig. 7, L denotes an imaginary line which extends in the longitudinal direction of the vehicle while passing through a substantially intermediate position between the side sill portion 13 (refer to Fig. 3) of the floor panel 10 and the floor tunnel 11. A cable 6B in this embodiment is laid out in such a manner as to extend along the imaginary line L to thereby avoid the position where the side sill portion 13 resides. To be more specific, the cable 6B is laid out in such a manner as to extend along the imaginary line L on an inner or outer surface of the floor panel 10.

Thus, since the cable 6B is laid out in such a manner as to extend along the imaginary line L, which is apart from the side sill portion 13, even in the event that the side sill portion 13 is deformed when the vehicle is involved in a side collision, the influence to the cable 6B is small. Consequently, the damage to the cable 6B can be prevented which would otherwise be the case when the vehicle is involved in a side collision. As a result, as with the embodiments that have been described above, not only can the function of the latch releasing means 6 be maintained in a more ensured fashion but also the malfunction of the door latch mechanism 2 can be prevented in a more ensured fashion. Note that the cable 6B may only have to be laid out to extend along the imaginary line L. Namely, the cable 6B may be able to be laid out in such a manner as to extend in the longitudinal direction of the vehicle while passing through the substantially intermediate position between the floor tunnel 11 and the side sill portion 13.

The transmission means in the latch releasing mechanism 6 is not specified to the configuration which utilizes the cable 6B but may arbitrarily be configured so as to be combined with a linkage. In addition, the handle 6A may also be configured arbitrarily. In short, the operation force required to release the hold of the door 3 in the fully closed state can be exerted in any way. Furthermore, the door latch mechanism 2 may be disposed within the door 3. Note that as with the embodiments that have been described heretofore, the door latch mechanism 2 is provided on the vehicle body 1 side as the handle 6A is so done, the configuration of the transmission means which connects therebetween can be simplified by utilizing the cable 6B or the like which is easy to lay out.

## Claims

1. A vehicle body and a door latch apparatus for a vehicle body comprising:
a door latch means (2) which holds a door (3) provided on the vehicle body (1) in a fully closed state;
a first latch releasing means (5) which releases the hold of the door (3) in the fully closed state by virtue of a drive force of an actuator; and
a second latch releasing means (6) which releases the hold of the door in the fully closed state by virtue of an operation force exerted on an operation unit (6A),
wherein the operation unit (6A) of the second latch releasing means (6) is disposed at a position on a central portion of a floor panel (10) of the vehicle body (1) where a floor tunnel (11) extends in a longitudinal direction of the vehicle,
**characterized in that**
the operation unit (6A) of the second latch releasing means (6) is connected to the door latch means (2) via a transmission mechanism (6B) for the operation force, and
the transmission mechanism (6B) is laid out in such a manner as to extend along the floor tunnel (11) and a crossmember (12) which extends in a direction which intersects with the floor tunnel (11).

2. A vehicle body and a door latch apparatus according to claim 1, wherein the door latch means is provided on the vehicle body (1) side.

3. A vehicle body and a door latch apparatus according to claim 1 or 2, wherein the door latch means comprises:
a latch (7) which can mesh with a striker (4) on the door side; and
a pawl (8) which can retain the latch (7) at a position where the latch (7) is allowed to mesh with the striker (4),
wherein the actuator of the first latch releasing means (5) comprises an electric actuator which can move the pawl (8) to a position where the retention of the latch (7) is released, and
wherein the operation unit (6A) of the second latch releasing means (6) can operate the pawl (8) via the transmission mechanism (68) so that the pawl (8) is moved to the position where the retention of the latch (7) is released.

## Patentansprüche

1. Fahrzeugkarosserie und Türverriegelungsvorrichtung für eine Fahrzeugkarosserie, die umfasst:
eine Türverriegelungseinrichtung (2), die eine an der Fahrzeugkarosserie (1) vorhandene Tür (3) in einem vollständig geschlossenen Zustand hält;
eine erste Verriegelungs-Löseeinrichtung (5), die den Halt der Tür (3) in dem vollständig geschlossenen Zustand mittels einer Antriebskraft eines Betätigungselementes löst; und
eine zweite Verriegelungs-Löseeinrichtung (6), die den Halt der Tür in dem vollständig geschlossenen Zustand mittels einer Betätigungskraft löst, die auf eine Betätigungseinheit (6A) ausgeübt wird;
wobei die Betätigungseinheit (6A) der zweiten Verriegelungs-Löseeinrichtung (6) an einer Position an einem Mittelabschnitt einer Bodenplatte (10) der Fahrzeugkarosserie (1) angeordnet ist, in dem ein Bodentunnel (11) in einer Längsrichtung des Fahrzeugs verläuft,
**dadurch gekennzeichnet, dass**
die Betätigungseinheit (6A) der zweiten Verriegelungs-Löseeinrichtung (6) mit der TürVerriegelungseinrichtung (2) über einen Übertragungsmechanismus (6B) für die Betätigungskraft verbunden ist und der Übertragungsmechanismus (6B) so ausgeführt ist, dass er sich entlang des Bodentunnels (11) und eines Querelementes (12) erstreckt, das sich in einer Richtung erstreckt, die den Bodentunnel (11) schneidet.

2. Fahrzeugkarosserie und Türverriegelungsvorrichtung nach Anspruch 1, wobei die Türverriegelungseinrichtung an der Seite der Fahrzeugkarosserie (1) vorhanden ist.

3. Fahrzeugkarosserie und Türverriegelungseinrichtung nach einem der Anspruch 1 oder 2, wobei die Türverriegelungseinrichtung umfasst:
einen Riegel (7), der mit einem Schlagbolzen (4) an der Türseite in Eingriff kommen kann; und
eine Klaue (8), die den Riegel (7) an einer Position halten kann, an der der Riegel (7) mit dem Schlagbolzen (4) in Eingriff kommen kann,
wobei das Betätigungselement der ersten Verriegelungs-Löseeinrichtung (5) ein elektrisches Betätigungselement umfasst, das die Klaue (8) an eine Position bewegen kann, an der der Rückhalt des Riegels (7) gelöst wird, und
wobei die Betätigungseinheit (6A) der zweiten Verriegetungs-Löseeinrichtung (6) die Klaue (8) über den Übertragungsmechanismus (6B) so betätigen kann, dass die Klaue (8) an die Position bewegt wird, an der der Rückhalt des Riegels (7) gelöst wird.

## Revendications

1. Carrosserie de véhicule et dispositif de verrouillage de porte pour une carrosserie de véhicule comprenant :
des moyens de verrouillage de porte (2) qui maintiennent une porte (3) placée sur la carrosserie de véhicule (1) dans un état entièrement fermé ;
des premiers moyens de déverrouillage (5) qui relâchent le maintien de la porte (3) dans l'état entièrement fermé par une force d'entraînement d'un actionneur ; et
des seconds moyens de déverrouillage (6) qui relâchent le maintien de la porte dans l'état entièrement fermé par une force d'actionnement exercée sur une unité d'actionnement (6A),
dans lesquels l'unité d'actionnement (6A) des seconds moyens de déverrouillage (6) est disposée en une position sur une partie centrale d'un panneau de plancher (10) de la carrosserie de véhicule (1) où un tunnel de plancher (11) s'étend dans une direction longitudinale du véhicule,
**caractérisés en ce que**
l'unité d'actionnement (6A) des seconds moyens de déverrouillage (6) est reliée aux moyens de verrouillage de porte (2) via un mécanisme de transmission (6B) pour la force d'actionnement, et le mécanisme de transmission (6B) est disposé de façon à s'étendre le long du tunnel de plancher (11) et d'un élément latéral (12) qui s'étend dans une direction qui coupe le tunnel de plancher (11).

2. Carrosserie de véhicule et dispositif de verrouillage de porte selon la revendication 1, dans lesquels les moyens de verrouillage de porte sont placés du côté de la carrosserie de véhicule.

3. Carrosserie de véhicule et dispositif de verrouillage de porte selon la revendication 1 ou 2, dans lesquels les moyens de verrouillage de porte comprennent :
un verrou (7) qui peut coopérer avec un percuteur (4) du côté porte ; et
un cliquet (8) qui peut retenir le verrou (7) en une position où le verrou (7) peut coopérer avec le percuteur (4),
dans lequel l'actionneur des premiers moyens de déverrouillage (5) comprend un actionneur électrique qui peut déplacer le cliquet (8) dans une position où la retenue du verrou (7) est relâchée, et
dans lequel l'unité d'actionnement (6A) des seconds moyens de déverrouillage de porte (6) peut actionner le cliquet (8) via le mécanisme de transmission (6B) de telle manière que le cliquet (8) est déplacé dans la position où la retenue du verrou (7) est relâchée.
